# EUROPEAN PATENT APPLICATION

(11) **EP 3 081 883 A1**
(43) Date of publication of application: **19.10.2016**
(21) Application number: 14861773.1
(22) Date of filing: 10.11.2014
(51) Int. Cl.: F25B 41/00, F16L 23/02, H05K 7/20

(54) **PIPING STRUCTURE, COOLING DEVICE USING SAME, AND REFRIGERANT VAPOR TRANSPORT METHOD**

(30) Priority: 14.11.2013 JP 2013235565
(71) Applicant: NEC Corporation, Tokyo 108-8001 (JP); NEC Platforms, Ltd., Kanagawa 213-8511 (JP)
(72) Inventor: CHIBA, Masaki, Tokyo 108-8001 (JP); YOSHIKAWA, Minoru, Tokyo 108-8001 (JP); SHOUJIGUCHI, Akira, Tokyo 108-8001 (JP); INABA, Kenichi, Tokyo 108-8001 (JP); MATSUNAGA, Arihiro, Tokyo 108-8001 (JP); SATO, Masanori, Tokyo 108-8001 (JP); HOSAKA, Tadao, Kawasaki-shi Kanagawa 213-8511 (JP); NAKAMURA, Yasuhito, Kawasaki-shi Kanagawa 213-8511 (JP)
(74) Representative: Vossius & Partner Patentanwälte Rechtsanwälte mbB
(86) International application number: PCT/JP2014/005637
(87) International publication number: WO 2015/072128

(57) **Abstract**

It is difficult to avoid a decrease in cooling capacity without causing an increase in power consumption if a cooling device including a piping structure grows in size, therefore, a piping structure according to an exemplary aspect of the present invention includes a tubular part including a first flow passage through which a refrigerant flowing and a shell region surrounding the first flow passage; an introduction part composing a part of the shell region and including a second flow passage connected to the first flow passage; and a connection located at an end, between ends of the introduction part, on the side opposite to an end on a side where the second flow passage being connected to the first flow passage.

## Description

### [Technical Field]

The present invention relates to piping structures used for cooling devices for semiconductor devices, electronic devices, and the like, in particular, to a piping structure, a cooling device including the piping structure, and a method for transporting refrigerant vapor, which are used for a cooling device employing an ebullient cooling system in which heat transport and heat radiation are performed by a cycle of vaporization and condensation of a refrigerant.

### [Background Art]

In recent years, with the improvement of information processing technologies and the evolution of the Internet environment, the amount of information process needed has been increasing. To process huge amounts of data, data centers (DCs) have been located and operated in various regions. The data center (DC) is defined as a specialized facility in which servers and data communication devices are installed and operated. To stably operate such data center (DC), it is necessary to keep constant the temperature and humidity in a server room in the facility. This causes the problem that the power consumption of an air conditioner increases significantly if the amount of heat generation of the server increases.

To solve the above-mentioned problem, the development of techniques to reduce power consumption of an air conditioner has been in progress, and an example of the techniques is described in Patent Literature 1. A related cooling unit described in Patent Literature 1 has a structure in which the unit can be attached to the rear door of a server rack. The related cooing unit is made up of a radiator unit to remove heat from the hot air exhausted from the rear surface, a fan unit in which fans to exhaust the hot air forcibly are arranged, and a frame unit to assemble these units integrally. The related cooling unit configured integrally composes the rear door of the rack.

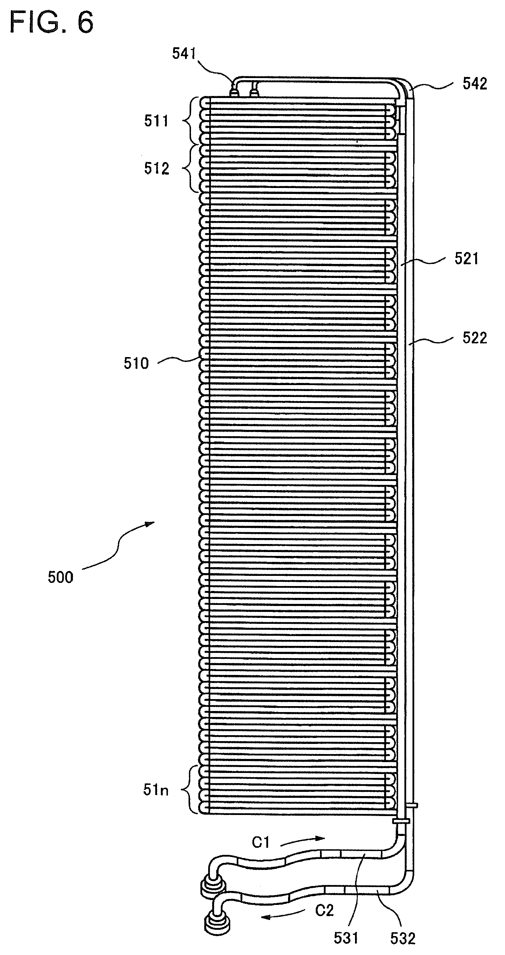

FIG. 6 illustrates a configuration of a pipe aggregation included in the radiator unit of the related cooling unit. A pipe aggregation 500 includes a lateral pipe 510 laterally arranged tortuously with a multiply meandering shape and a set of longitudinal pipes 521 and 522 longitudinally arranged and connected to the lateral pipe 510. The longitudinal pipes 521 and 522 are respectively connected to a set of lower pipes 531, 532 and upper pipes 541, 542 to circulate a refrigerant.

The lower pipe 531, the longitudinal pipe 521, and the upper pipe 541 compose an inflow pipe to flow a refrigerant before heat absorption in a direction indicated by an arrow C1. The lower pipe 532, the longitudinal pipe 522, and the upper pipe 542 compose an outflow pipe to flow a refrigerant after heat absorption in a direction indicated by an arrow C2. The other ends of the lower pipes 531 and 532 are connected to a heat exchanger placed outdoors through hoses. It produces a cooling system with a refrigerant circulating that the refrigerant, which has absorbed heat and flowed back to the lower pipe 532 of the outflow, flows out to the heat exchanger. At that time, it is assumed that a pump is driven to circulate the refrigerant forcibly.

In this way, the pipe aggregation 500 has a collective structure of the lateral pipe 510, and the function of the lateral pipe 510 brings about a cooling effect. The lateral pipe 510 is an aggregation of a plurality of lateral pipe sets 511, 512 to 51n in which a tortuous pipe structure having three meanders is paired as illustrated in FIG. 6, for example. It forms the skeleton of the pipe aggregation 500 to arrange the plurality of lateral pipe sets 511 to 51n from top to bottom along the longitudinal pipes 521 and 522, and to weld a pipe end of each lateral pipe set to the longitudinal pipes.

It is said that such a configuration enables to produce a cooling system with enhanced cooling efficiency according to the related cooling unit.

### [Citation List]

### [Patent Literature]

[PTL 1]
Japanese Patent Application Laid-open No. 2010-041007 (paragraphs [0017] to [0043], and FIG. 3)

### [Summary of Invention]

### [Technical Problem]

As mentioned above, the related cooling unit described in Patent Literature 1 has a structure in which the unit can be attached to the rear door of a server rack. The cooling unit grows in size because some rear doors of racks for electronic devices such as server racks are equal to or greater than 2 meters in height.

On the other hand, in the radiator unit of the related cooling unit, the pipe aggregation is formed by welding and connecting pipe ends of a plurality of lateral pipe sets to the longitudinal pipes. Accordingly, if the cooling unit grows in size, connection spots of each pipe (refrigerant piping) through which the refrigerant flows increase, and the pressure loss of refrigerant vapor in a connection part also increases. As a result, there has been a problem that a cooling capacity decreases in a large-size cooling unit when employing the pipe aggregation (piping structure) in the related cooling unit.

In a cooling system employing the related cooling unit and the heat exchanger described in Patent Literature 1, it is assumed to drive a pump to circulate the refrigerant forcibly. However, in this case, there has been a problem that the power consumption of the cooling system increases.

Thus, there has been a problem that it is difficult to avoid a decrease in cooling capacity without causing an increase in power consumption if a cooling device including a piping structure grows in size as in the case of using it attached to the rear door of a rack for an electronic device.

The object of the present invention is to provide a piping structure, a cooling device including the piping structure, and a method for transporting refrigerant vapor that solve the problem that it is difficult to avoid a decrease in cooling capacity without causing an increase in power consumption if a cooling device including a piping structure grows in size.

### [Solution to Problem]

A piping structure according to an exemplary aspect of the present invention includes a tubular part including a first flow passage through which a refrigerant flowing and a shell region surrounding the first flow passage; an introduction part composing a part of the shell region and including a second flow passage connected to the first flow passage; and a connection located at an end, between ends of the introduction part, on the side opposite to an end on a side where the second flow passage being connected to the first flow passage.

A method for transporting refrigerant vapor according to an exemplary aspect of the present invention includes making a first refrigerant flow in a first direction; making a second refrigerant flow in a second direction different from the first direction; and making the first refrigerant and the second refrigerant join so that an angle on the same plane, between the first direction and the second direction may be an acute angle.

### [Advantageous Effects of Invention]

According to the piping structure, the cooling device including the piping structure, and the method for transporting refrigerant vapor of the present invention, it is possible to avoid a decrease in cooling capacity without causing an increase in power consumption even when a cooling device grows in size.

### [Brief Description of Drawings]

[FIG.1] FIG. 1 is a cross-sectional view illustrating a configuration of a piping structure in accordance with a first exemplary embodiment of the present invention.
[FIG. 2] FIG. 2 is a schematic view illustrating a configuration of a server module including a cooling device including a piping structure in accordance with a second exemplary embodiment of the present invention.
[FIG. 3] FIG. 3 is a schematic view from a rear view of a server rack housing a cooling device using the piping structure in accordance with the second exemplary embodiment of the present invention.
[FIG. 4] FIG. 4 is a cross-sectional view to explain a configuration of the piping structure in accordance with the second exemplary embodiment of the present invention.
[FIG. 5] FIG. 5 is a cross-sectional view to explain another configuration of the piping structure in accordance with the second exemplary embodiment of the present invention.
[FIG. 6] FIG. 6 is a rear view illustrating a configuration of a pipe aggregation included in a radiator unit of a related cooling unit.

### [Description of Embodiments]

Exemplary embodiments of the present invention will be described with reference to drawings below.

### [A first exemplary embodiment]

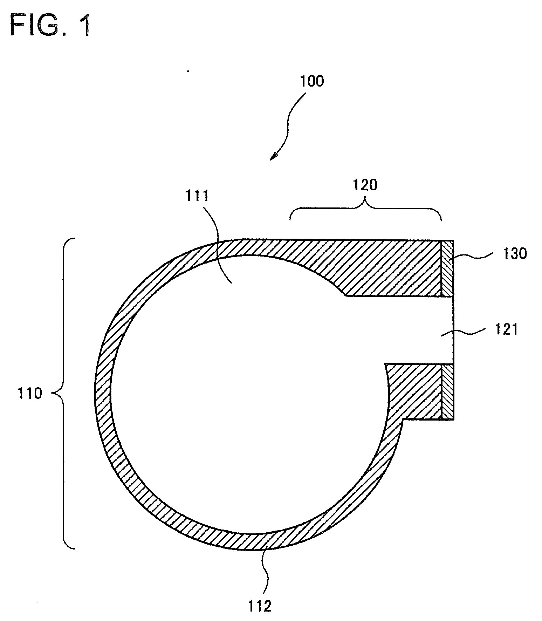

FIG. 1 is a cross-sectional view illustrating a configuration of a piping structure 100 in accordance with a first exemplary embodiment of the present invention. The piping structure 100 in accordance with the present exemplary embodiment includes a tubular part 110, an introduction part 120, and a connection 130.

The tubular part 110 includes a first flow passage 111 through which a refrigerant flowing and a shell region 112 surrounding the first flow passage 111. The introduction part 120 composes a part of the shell region 112 and includes a second flow passage 121 connected to the first flow passage 111. The connection 130 is located at an end, between ends of the introduction part 120, on the side opposite to an end on the side where the second flow passage 121 is connected to the first flow passage 111.

According to the piping structure 100 of the present exemplary embodiment, a refrigerant flowing through the first flow passage 111 joins a refrigerant flowing into the first flow passage 111 through the second flow passage 121 included in the introduction part 120 composing a part of the shell region 112. Therefore, it is possible to avoid a decrease in cooling capacity because a pressure loss in joining can be controlled by the introduction part 120. That is to say, even when a cooling device is enlarged by placing the introduction parts 120 at a plurality of positions of the tubular part 110, it is possible to avoid an increase in pressure loss, and therefore, it is unnecessary to circulate a refrigerant forcibly by driving a pump or the like. As a result, it is possible to avoid a decrease in cooling capacity without causing an increase in power consumption even when a cooling device grows in size.

The outer surface of the connection 130 can be a plane, and the connection 130 can be configured to have a seal structure. This configuration, according to the piping structure 100, makes it possible to connect the piping structure 100 to another piping in a simple structure.

### [A second exemplary embodiment]

In the present exemplary embodiment, a cooling device including a piping structure will be described that is mounted in a server rack installed in a data center (DC) or the like.

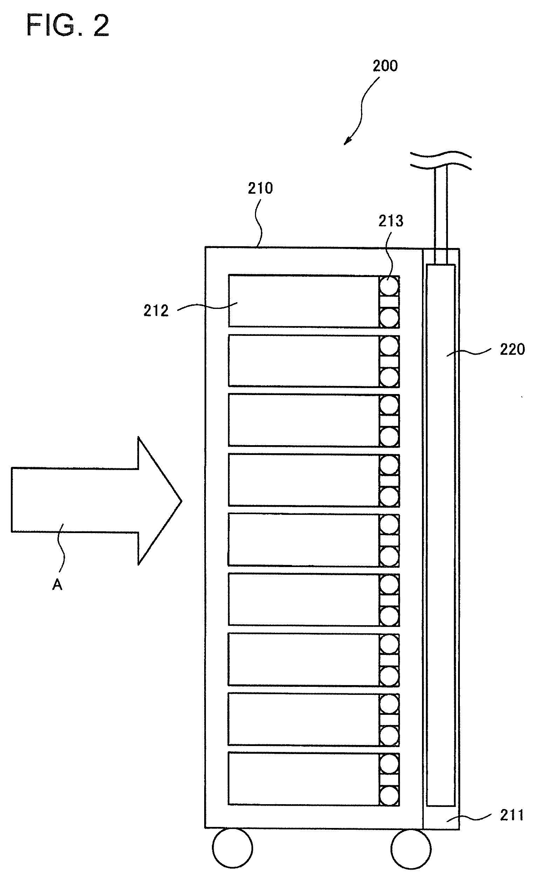

Fig. 2 illustrates a schematic configuration of a server module 200 installed in a data center (DC). In the data center (DC), a plurality of such server modules 200 are commonly installed. The server module 200 includes a server rack 210 and a heat transport module 220 loaded in a rear door 211 of the server rack 210. The heat transport module 220 is a cooling device employing an ebullient cooling system in which heat transport and heat radiation are performed by a cycle of vaporization and condensation of a refrigerant, and the cooling device including a piping structure according to the present exemplary embodiment can be used. In the server rack 210, a plurality of electronic devices 212 and a plurality of fans 213 are mounted.

An air conditioner supplies cooling air into a server room in the direction of an arrow A in FIG. 2. The fan 213 in the server rack 210 breathes the cooling air, by which the electronic device 212 is cooled. After cooling the electronic device 212, the cooling air is exhausted from the rear door 211 of the server rack 210. The exhausted cooling air is drawn and cooled by the air conditioner, and then supplied into the server room again.

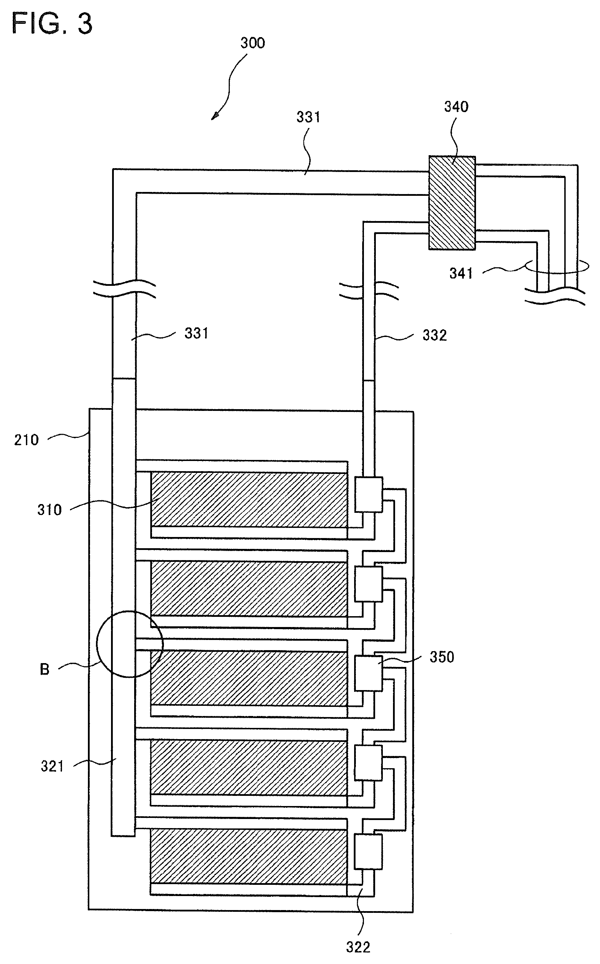

FIG. 3 illustrates a configuration of a cooling device 300 including the piping structure according to the present exemplary embodiment. FIG. 3 is a view watching the server rack 210 illustrated in FIG. 2 from the rear side. A plurality of evaporation units 310 are provided for an exhaust heat unit of the electronic device 212. A fin-and-tube type heat exchanger can be used as the evaporation unit 310, for example. The fin-and-tube type heat exchanger is made up of fins and heat-transfer tubes. The heat exchange is performed between the air flowing between the fins and a refrigerant flowing in the heat-transfer tube.

The evaporation unit 310 is disposed covering an exhaust side of the server rack 210. The evaporation unit 310 receives heat from exhaust air that has been warmed due to the effect of cooling the electronic device 212, draws the heat from the exhaust air by vaporization of a refrigerant stored inside, and exhausts the cooled exhaust air to the outside of the server rack 210.

The evaporation unit 310 is connected to a vapor pipe 321 and a liquid pipe 322. The vapor pipe 321 is connected to an external vapor pipe 331 extending to the outside of the server room.

Refrigerant vapor resulting from the vaporization in the evaporation unit 310 flows into the vapor pipe 321, it is transported to the outside of the server room through the vapor pipe 321 and the external vapor pipe 331, and it flows into a heat radiator 340 installed outside the server room. The refrigerant vapor radiates heat, condenses and liquefies by exchanging heat with cooling water supplied through a cold water pipe 341 in the heat radiator 340, and then flows back into the server room through an external liquid pipe 332. The configuration of the heat radiator 340 is not limited specifically as long as the heat radiator 340 has a function of condensing and liquefying the refrigerant vapor by drawing heat from the refrigerant vapor. The heat radiator 340 is not limited to a water-cooling system using liquid as a medium used for heat exchange, an air-cooling system is available.

The refrigerant having flowed back into the server room flows into the evaporation unit 310 again through a distribution structure 350. The distribution structure 350 is located at the same height in vertical direction as each evaporation unit 310 and has outlets at different positions in height. Therefore, the liquid refrigerant having flowed into the distribution structure 350 initially flows out toward the evaporation unit 310 from an outlet located below. When a liquid level of the evaporation unit 310 rises to the height of the other outlet of the distribution structure 350, the refrigerant flows out from the other outlet, and it is supplied to the distribution structure 350 located at the bottom. That is to say, the distribution structure 350 distributes the refrigerant liquefied in the heat radiator 340 to at least one of the plurality of evaporation units 310. The configuration like this enables an arbitrary liquid measure of a refrigerant to be supplied to each evaporation unit 310.

A refrigerant can be used whose saturated vapor pressure is equal to or lower than the atmospheric pressure at zero degree Celsius. It is possible to use as the refrigerant organic refrigerants such as hydrofluorocarbon, hydrofluoroether, hydrofluoroketone, or the like.

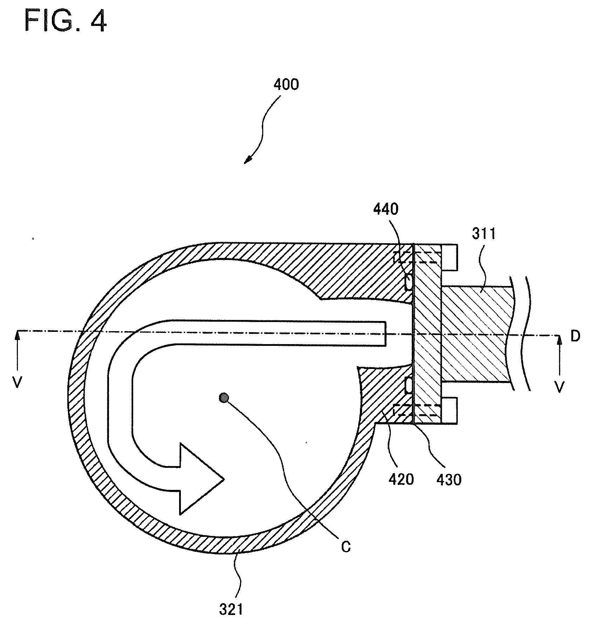

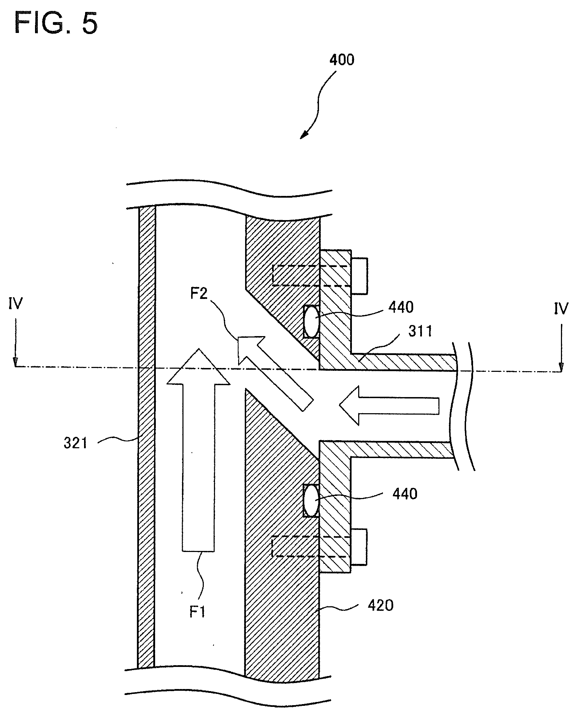

Next, a piping structure 400 at a position connecting the evaporation unit 310 to the vapor pipe 321 will be described with reference to FIG. 4 and FIG. 5. The piping structure 100 described in the first exemplary embodiment can be used as the piping structure of the present exemplary embodiment.

FIG. 4 illustrates an area circled by a circle B shown in FIG. 3. FIG. 4 is a cross-sectional view obtained by cutting a position connecting the vapor pipe 321 to a vapor outlet 311, that is, a vent of the evaporation unit 310, with a plane perpendicular to the central axis C of the vapor pipe 321.

As illustrated in FIG. 4, the piping structure 400 of the present exemplary embodiment includes a block shape 420 as the introduction part between the shell region composing the vapor pipe 321 and the vapor outlet 311. At an end of the block shape 420 on the side opposite to the vapor pipe 321, a connection 430 is disposed that includes a plane parallel to an end plane of the vapor outlet 311. The block shape 420 composes a part of the shell region of the vapor pipe 321. The outer surface of the block shape 420 can include a portion made up of a curved surface.

The block shape 420 internally includes a flow passage (a second flow passage) connecting the vapor outlet 311 to a tubular part (a first flow passage) of the vapor pipe 321. The drawing direction of the flow passage (the second flow passage) can be configured so as not to intersect with the central axis C of the tubular part. That is to say, it can be configured to attach the vapor outlet 311 to the vapor pipe 321 with some deviations between the extension of the central axis D of the flow passage (the second flow passage) connected to the vapor outlet 311 and the central axis C of the vapor pipe 321. Thus, arranging the flow passages with some deviations between their central axes enables to avoid a collision in an area where moving fluids to be joined have the highest flow velocity, and to suppress an increase in fluid pressure.

The connection 430 can include an opening through which a refrigerant flows, and the piping structure 400 can be configured so that the cross-sectional area of the flow passage (the first flow passage) of the vapor pipe 321 may become larger than the cross-sectional area of the opening. That is to say, the cross-sectional area of the flow passage made of the vapor pipe 321 can be made larger than the cross-sectional area of the vapor outlet 311. The advantageous effect obtained by such a configuration will be described below. Through the vapor pipe 321 and the external vapor pipe 331 flows refrigerant vapor that has flowed in from a plurality of vapor outlets 311 and has been joined. At that time, it enables to suppress an increase in internal pressure with the refrigerant vapor joining together to make the cross-sectional area of the flow passage made of the vapor pipe 321 larger than the cross-sectional area of the vapor outlet 311.

In general, in a cooling device employing an ebullient cooling system such as this heat transport module 220, the vaporization temperature of a refrigerant affects cooling performance. An increase in internal pressure causes an increase in the boiling point of a refrigerant. However, in the heat transport module according to the present exemplary embodiment, it becomes possible to prevent the cooling performance from deteriorating because an increase in internal pressure of a refrigerant can be suppressed as described above.

As described above, at the end of the block shape 420, the connection 430 is disposed that includes a plane parallel to the end plane of the vapor outlet 311. Therefore, it is possible for the connection 430 to include a simple seal structure 440. As the seal structure 440, a configuration can be adopted in which a seal material is sandwiched and fixed with a screw, for example. It is preferable to use a material resistant to a refrigerant as the seal material and possible to use hydrogenated nitrile rubber (HNBR), a metal O-ring, or the like, for example.

Using a refrigerant having low saturated vapor pressure enables the heat transport module 220 to be destroyed due to an increase in internal pressure even though a configuration is used in which a seal material is sandwiched and fixed with a screw. This configuration enables to produce the heat transport module 220 without a process such as welding and brazing even though a plurality of evaporation units 310 are disposed in the rear door 211 of the server rack 210. The above-described configuration enables the device to be disassembled during maintenance of the heat transport module 220.

FIG. 5 illustrates another configuration of the piping structure 400 at a position connecting the evaporation unit 310 to the vapor pipe 321. FIG. 5 is a cross-sectional view obtained by cutting the piping structure 400 in FIG. 4 with a plane including the central axis D of the vapor outlet 311 and parallel to the central axis C of the vapor pipe 321.

As illustrated in FIG. 5, the piping structure 400 can be configured in which the angle on the same plane, between the drawing direction F1 of the tubular part (the first flow passage) of the vapor pipe 321 and the drawing direction F2 of the flow passage inside the block shape 420 (the second flow passage) connected to the vapor outlet 311, is an acute angle. The angle is equal to or smaller than 45 degrees preferably and can be 45 degrees typically.

This configuration makes it easy for the refrigerant vapor to flow to the traveling direction F1 in the vapor pipe 321 when the refrigerant vapor flows from the vapor outlet 311 and joins in the vapor pipe 321. In addition, there is a decrease in blocking a refrigerant vapor stream flowing from the lower side, it is possible to suppress an increase in the pressure due to a collision between fluids. Suppressing an increase in the pressure of the refrigerant vapor makes it possible to suppress an increase in the boiling point of the refrigerant and to avoid the deterioration of the cooling performance.

If a flow passage is obliquely formed and fluids are made to join as mentioned above, it has conventionally been necessary to machine, so as to fit the shape of the outer periphery of one pipe, a tip of the other pipe, and then to connect those pipes by welding or brazing. However, the piping structure 400 of the present exemplary embodiment is configured to include a flow passage inside the block shape 420 (the introduction part) corresponding to a thick wall part of the tubular part of the vapor pipe 321. Therefore, the flow passage makes it possible to adjust easily an angle at which refrigerant vapor streams join. Furthermore, the piping structure 400 can be configured to dispose the connection 430 including a plane at the end of the block shape 420, and therefore simple connecting means such as screwing can be used. This makes it possible to form the heat transport module 220 at low cost avoiding a decrease in the heat receiving performance of the evaporation units 310 even though a plurality of evaporation units 310 are included.

By a combination of respective configurations of the piping structure 400 described with reference to FIG. 4 and FIG. 5, it becomes possible for the refrigerant vapor flowing in from the vapor outlet 311 to join so as to draw a spiral in the moving direction of a refrigerant vapor stream flowing from the lower side. This makes it possible to suppress the occurrence of a pressure due to a collision between refrigerant vapor streams and to prevent the heat absorbing performance from deteriorating.

The piping structure 400 can be formed using an extrusion processing method. The extrusion processing method makes it possible to form a planar shape at an arbitrary position and also shape a part of the tubular part with a thick wall. Without limitation to this, the pipe structure 400 can also be formed by mounting a block material on a part of a pipe by welding or brazing.

The piping structure 400 according to the present exemplary embodiment can be applied not only to the cooling device but also to a connection between pipes used for transporting fluid whose pressure loss affects the performance.

According to the piping structure 400 of the present exemplary embodiment, it is possible to form a configuration in which a plurality of pipes are hermetically connected to the vapor pipe through which the refrigerant vapor flows by using low-cost means such as connecting means using a screw. Since it is possible to reduce the pressure loss in the joint portion of the refrigerant vapor, the refrigerant vapor can be favorably transported without requiring a drive source such as a pump, flow rate control using a valve, and the like. Therefore, it is possible to improve the heat absorbing performance of the cooling device including a piping structure.

Next, a method for transporting refrigerant vapor according to the present exemplary embodiment will be described. In the method for transporting refrigerant vapor according to the present exemplary embodiment, first, a first refrigerant is made to flow in a first direction, and a second refrigerant is made to flow in a second direction different from the first direction. The first refrigerant and the second refrigerant are made to join so that the angle on the same plane, between the first direction and the second direction may be an acute angle. The first refrigerant and the second refrigerant may be made to join so that the first direction may not intersect with the second direction.

As describe above, according to the piping structure 400 and the method for transporting refrigerant vapor of the present exemplary embodiment, it is possible to avoid an increase in pressure loss even when a cooling device is enlarged by placing the block shape 420 as the introduction part at a plurality of positions of the vapor pipe 321. Therefore, it is unnecessary to circulate a refrigerant forcibly by driving a pump or the like. As a result, it is possible to avoid a decrease in cooling capacity without causing an increase in power consumption even when a cooling device grows in size.

The present invention has been described with reference to the above-described exemplary embodiments as exemplary examples. However, the present invention is not limited to the above-described exemplary embodiments. That is to say, the present invention can be applied with various aspects that can be understood by those skilled in the art without departing from the scope of the present invention.

This application is based upon and claims the benefit of priority from Japanese Patent Application No. 2013-235565, filed on November 14, 2013, the disclosure of which is incorporated herein in its entirety by reference.

### [Reference Signs List]

- 100, 400: Piping structure
- 110: Tubular part
- 111: First flow passage
- 112: Shell region
- 120: Introduction part
- 121: Second flow passage
- 130, 430: Connection
- 200: Server module
- 210: Server rack
- 211: Rear door
- 212: Electronic device
- 213: Fan
- 220: Heat transport module
- 300: Cooling device using piping structure
- 310: Evaporation unit
- 311: Vapor outlet
- 321: Vapor pipe
- 322: Liquid pipe
- 331: External vapor pipe
- 332: External liquid pipe
- 340: Heat radiator
- 341: Cold water pipe
- 350: Distribution structure
- 420: Block shape
- 440: Seal structure
- 500: Pipe aggregation
- 510: Lateral pipe
- 511, 512 to 51n: Lateral pipe set
- 521, 522: Vertical pipe
- 531, 532: Lower pipe
- 541, 542: Upper pipe

## Claims

1. A piping structure, comprising:
a tubular part including a first flow passage through which a refrigerant flowing and a shell region surrounding the first flow passage;
an introduction part composing a part of the shell region and including a second flow passage connected to the first flow passage; and
a connection located at an end, between ends of the introduction part, on the side opposite to an end on a side where the second flow passage being connected to the first flow passage.

2. The piping structure according to claim 1,
wherein an outer surface of the connection is a plane.

3. The piping structure according to claim 1 or 2,
wherein the connection includes a seal structure.

4. The piping structure according to any one of claims 1, 2, and 3,
wherein the connection includes an opening through which the refrigerant flows, and
a cross-sectional area of the first flow passage is larger than a cross-sectional area of the opening.

5. The piping structure according to any one of claims 1, 2, 3, and 4,
wherein a drawing direction of the second flow passage does not intersect with a central axis of the first flow passage.

6. The piping structure according to any one of claims 1, 2, 3, 4, and 5,
wherein an angle on the same plane, between a drawing direction of the first flow passage and a drawing direction of the second flow passage, is an acute angle.

7. The piping structure according to any one of claims 1, 2, 3, 4, 5, and 6,
wherein a saturated vapor pressure of the refrigerant is equal to or lower than an atmospheric pressure at zero degree Celsius.

8. A cooling device including a piping structure, comprising:
the piping structure according to any one of claims 1, 2, 3, 4, 5, 6, and 7; and
a plurality of evaporation units connected to the connection,
wherein the refrigerant vaporizes by drawing heat in the evaporation unit.

9. The cooling device including the piping structure according to claim 8, further comprising a heat radiator connected to the tubular part and a distribution structure connected to the heat radiator,
wherein the heat radiator makes the refrigerant vaporized in the evaporation unit radiate heat and liquefy,
the distribution structure distributes the refrigerant liquefied in the heat radiator to at least one of the plurality of evaporation units.

10. A method for transporting refrigerant vapor, comprising:
making a first refrigerant flow in a first direction;
making a second refrigerant flow in a second direction different from the first direction; and
making the first refrigerant and the second refrigerant join so that an angle on the same plane, between the first direction and the second direction may be an acute angle.

11. The method for transporting refrigerant vapor according to claim 10, further comprising
making the first refrigerant and the second refrigerant join so that the first direction may not intersect with the second direction.
